# EUROPEAN PATENT SPECIFICATION

(11) **EP 2 068 145 B1**
(45) Date of publication and mention of the grant of the patent: **17.04.2019**
(21) Application number: 08021311.9
(22) Date of filing: 08.12.2008
(51) Int. Cl.: G01N 30/08, G01N 1/40, G01N 35/00, B03C 1/01

(54) **Manipulation of magnetic microparticles in a high pressure liquid system and extraction process**
Manipulation von magnetischen Mikropartikeln in einem Hochdruck-Flüssigkeitssystem und Extraktionsverfahren
Manipulation de microparticules magnétiques dans un système liquide haute pression et procédé d'extraction

(30) Priority: 07.12.2007 EP 07023765
(43) Date of publication of application: 10.06.2009
(73) Proprietor: Roche Diagnostics GmbH, 68305 Mannheim (DE); F. Hoffmann-La Roche AG, 4070 Basel (CH); Ludwig-Maximilians-Universität München, 80539 München (DE)
(72) Inventor: Vogeser, Michael, 81375 Muenchen (DE)

(56) References cited:
- EP-A1- 0 905 520
- EP-A1- 2 068 143
- WO-A-2007/009519
- WO-A1-2007/020294
- US-A1- 2002 036 141
- US-A1- 2003 168 392
- US-A1- 2008 217 254
- HUBBUCH J J ET AL: "High-gradient magnetic affinity separation of trypsin from porcine pancreatin", BIOTECHNOLOGY AND BIOENGINEERING, INTERSCIENCE PUBLISHERS, LONDON, GB, vol. 79, no. 3, 5 August 2002 (2002-08-05) , pages 301-313, XP002310325, ISSN: 0006-3592
- MATTHIAS FRANZREB ET AL: "Protein purification using magnetic adsorbent particles", APPLIED MICROBIOLOGY AND BIOTECHNOLOGY, SPRINGER-VERLAG, BE, vol. 70, no. 5, 1 May 2006 (2006-05-01), pages 505-516, XP019332155, ISSN: 1432-0614

## Description

The present invention concerns the automation of extraction processes by means of magnetic microparticles with a functionalized surface. Particularly, the invention concerns a device and a method for the manipulation of a liquid sample material in which magnetic microparticles are suspended whereby the microparticles have a functionalized surface and an analyte is bound to the surface. The sample material is introduced into a device with a liquid system through an injection device (50) and in a first mobile phase the sample material is carried to an extractor (90). In one or more sections (97) of the extractor (90) the microparticles are immobilized by means of a magnetic field of a controllable means (96) and separated from the remaining sample material. By switching over of a switching unit (110) a second mobile phase (75) is carried to the extractor (90) and the second mobile phase (75) detaches the adsorbed analyte from the surface of the microparticles. The second mobile phase (75) with the dissolved analyte(s) can be analyzed by way of chromatographic separation (130) and subsequent detection (140) of the analyte(s).

### Background

US 2003/0168392 A1 discloses a multi-dimensional liquid chromatograph separation system. The analytes are separated on a first analysis system consisting of a first column and a first mobile phase, and are trapped on trapping columns. The trapped analytes are subsequently loaded onto the second analysis system consisting of a second column and a second mobile phase. The document discloses the trapping and loading mechanism consisting of a combination of switching valves necessary to produce the serial separations.

An overview on the purification of proteins using magnetic adsorbent particles is given by Franzreb M., et al. Appl. Microbiol. Biotechnol. 70 (2006) 505-516. Particularly, Hubbuch, J.J., et al. Biotechnol Bioeng 79 (2002) 301-313 describe a high-gradient magnetic separation system comprising a filter chamber filled with woven wire mesh of steel, whereby the filter chamber is positioned between the plane pole shoes of an electromagnet which can be switched on or off. The filter chamber comprises two openings at opposite ends, at the top and the bottom of the chamber. The two openings of the filter chamber are fluidically connected and a pump is integrated in the fluidic connection. Thereby a loop is formed such that a liquid phase can be cycled within the loop. Between the pump and the bottom opening of the chamber the authors disclose a three way valve, suitable for fluidically connecting the filter chamber with a batch reactor and a first buffer reservoir. Between the pump and the top opening of the filter chamber a four way valve is disclosed, the valve being suitable for making a fluidic connection with a second or a third buffer reservoir, or a fraction collector. The authors further disclose the use of such a fluidic system for purifying trypsin from crude pancreatin. To this end, magnetic particles functionalized with benzamidine are incubated in the batch reactor with a suspension of crude pancreatin, whereby trypsin is adsorbed to the particles. The suspension with the magnetic particles is fed into the loop together with binding buffer. The suspension is circulated in the loop and passed through the filter chamber several times with the electromagnet being switched on, whereby the magnetic particles are immobilized in the filter chamber. Subsequently, the liquid phase is exchanged by a washing buffer, the immobilized magnetic particles are released by switching the magnet off, and circulated in the loop with the washing buffer. During the washing step trypsin remains adsorbed to the magnetic particles. After a further immobilization step, the washing buffer is substituted with an elution buffer and elution is performed by again releasing the magnetic particles and circulating buffer and particles in the loop. The last step is the recovery of the elution buffer with trypsin from the system while the magnetic particles are retained in the filter chamber.

WO 2007/009519 discloses a system in which the separation chamber comprises, between two frits, a fluidic-bed of functionalized magnetic particles. A magnetic field can be applied and as a result the magnetic particles are immobilized at the walls of the separation chamber. A liquid phase containing an analyte is circulated through the separation chamber. Washing and elution steps can be performed.

US 2008/0217254 discloses a magnetic trap in a fluid handling system additionally comprising a plurality of rotary valve switching units. The magnetic trap comprises a plurality of pairs of magnets. A pair comprises two magnets which are placed side by side in opposite orientation, generating a magnetic field gradient. Several such pairs of magnets are positioned on a rotary device. A tube being part of the fluid system is positioned in a circular arrangement and in close proximity to the magnets such that high magnetic field gradients are applied to the lumen of the tube. When the device rotates the magnets, the magnetic field gradients are moved along the tube lumen. The device can be rotated clockwise or counterclockwise. Magnetic beads are trapped in the tube lumen. Movement of magnetic beads in the tube lumen of the trap is controlled by the movement of the magnetic field gradients.

For the majority of *in-vitro* diagnostic analyses it is necessary to extract one or more target analytes from complex sample materials (serum, plasma, whole blood, urine etc.). In this connection the respective target analytes are concentrated by different processes whereas components of the sample matrix which would hinder the subsequent analysis (e.g. proteins, peptides, salts) are depleted. The following extraction methods have been previously used to concentrate target analytes: protein precipitation with organic solvents or acids; liquid-liquid extraction (solvent extraction) with an evaporation step; solid phase extraction on cartridges which contain particles with defined surface structures (especially hydrocarbon-functionalized silica particles; solid phase extraction, SPE).

Extraction methods known from the prior art require a large amount of manual work. Methods for automating such extraction processes have up to now been technically very elaborate and have numerous disadvantages. They require, on the one hand, very demanding mechanical constructions e.g. pipetting systems and/or vacuum systems. On the other hand, the known methods require a large amount of solid and liquid consumables e.g. extraction cartridges, extraction plates, solvents. Furthermore, they require a long processing period and are characterized by a low sample throughput and limited series lengths.

An important aim of the work towards the present invention was to develop an extraction system which, in combination with a separation and analytical system, forms a substantially closed system. The liquid system according to the invention which is preferably a high pressure liquid system overcomes the limitations of current automated extraction processes. A particular object of the invention was to overcome and simplify certain disadvantages concerning the manipulation of magnetic or paramagnetic particles during the extraction process.

### Summary of the invention

The present invention provides a device Device for the separation of magnetic or paramagnetic microparticles and the elution of an analyte adsorbed on said particles, the device being a liquid system (LS) comprising a first and a second inlet (10, 20) for a first and a second liquid mobile phase (65, 75), wherein the mobile phase is phases are in a liquid state of aggregation, means for making fluidic connections (30), a switching unit for producing two different fluid connecting states (110), the switching unit having three entry ports (E1, E2, E3) and three exit ports (A1, A2, A3), magnetic or paramagnetic microparticles (122) and liquid sample material (121), at least one pressure-generating means (40), an injection device (50), two storage containers (60, 70) for a first and a second mobile phase (65, 75), a collecting vessel (80), an outlet (100), and an extractor (90), a1) wherein the extractor (90) comprises (i) an entry port (91), (ii) an exit port (92), (iii) a section (97) between said entry port and said exit port, the section comprising a fluid connecting line (95), and (iv) a means (96) capable of temporarily applying a local magnetic field to the fluid connecting line (95) in the section (97), b1) wherein the first inlet (10) is designed such that the first mobile phase (65) can be fed under pressure from the first storage container (60) to the LS via a fluidic connection; b2) wherein the first inlet (10) is additionally fluidically connected to an injection device (50), the injection device being designed such that it allows a mixture (120) of liquid sample material (121) and said magnetic or paramagnetic microparticles suspended therein (122) to be introduced into the first mobile phase that was introduced through the inlet; b3) wherein the second inlet (20) is designed such that the second mobile phase (75) can be fed under pressure from the second storage container (70) to the LS via a fluidic connection; b4) wherein the first inlet (10) is connected to the first entry port (E1) of the switching unit (110) and the second inlet (20) is fluidically connected to the second entry port (E2) of the switching unit; c1) wherein the entry port (91) of the extractor (90) is fluidically connected to the first exit port (A1) of the switching unit, and the exit port (92) of the extractor is fluidically connected to the third entry port (E3) of the switching unit; c2) the second exit port (A2) of the switching unit (110) is the outlet (100) or is fluidically connected to the outlet (100); c3) the third exit port (A3) of the switching unit (110) is fluidically connected to the collecting vessel (80); and d1) the switching unit (110) is suitable in a first connecting state (I) for fluidically connecting E1 and A1, E2 and A2 as well as E3 and A3 and in the second connecting state (II) it is suitable for fluidically connecting E2 and A1, E3 and A2 as well as E1 and A3, and the device being further characterized in that e1) the means (96) comprises a rotatable circular disk (200) with a controllable actuator capable of adjusting the disk, by way of rotation, in a first and a second position; e2) a fraction of the circumference of the disk (200) is located in proximity to the fluid connecting line (95) of the section (97); e3) in a segment of the disk one or more permanent magnets (210) are attached; e4) in a first position of the disk the magnetic field of the one or more magnets is applied to the fluid connecting line (95) of the section (97); and e5) in a second position the magnetic field applied to the fluid connecting line (95) of the section (97) is reduced.

The invention further provides the use of a device according to the invention for manipulating magnetic microparticles and two different mobile phases in a liquid state of aggregation.

The invention further provides a method for obtaining a purified analyte from a complex liquid sample material containing the said analyte comprising the steps (a) contacting the liquid sample material (121) containing the analyte with microparticles (122) made of a magnetic or paramagnetic material with a functionalized surface (123) whereby the analyte (124) adsorbs to the surface; followed by (b) introducing the sample material with the microparticles into a device according to the invention using the injection device (50); followed by (c) pumping a first mobile phase (65) from a first storage vessel (60) into the first inlet (10) of the device where the switching unit (110) of the device makes the connecting state (I) and in the extractor (90) a magnetic field is applied to the connecting line (95) within the section (97), the magnetic field being suitable for immobilizing the magnetic or paramagnetic microparticles (122) contained in the mobile phase entering through the line (95) on the nearest inner wall (93) of the line (95) facing the magnetic field in the first section (97); followed by (d) immobilizing the microparticles (122) in the extractor (90) on the inner wall (93) of the line (95) within the section (97) of the line; followed by (e) separating the microparticles (122) from the remaining sample material by further pumping the first mobile phase (65) from the first storage vessel (60) into the first inlet (10) whereby the immobilized microparticles are washed with the first mobile phase and the remaining sample material is fed into the collecting container (80); followed by (f) switching over the switching unit (110) into the connecting state (II) and pumping a second mobile phase (75) from the second storage vessel (70) into the second inlet (20) of the device where the second mobile phase (75) is suitable for detaching the adsorbed analyte from the surface of the microparticles (122); followed by (g) eluting the analyte by contacting the microparticles (122) with the second mobile phase (75); followed by (h) moving the second mobile phase containing the eluted analyte to the outlet (100) of the device by further pumping the second mobile phase (75) from the second storage vessel (70) into the second entry port (20) by means of which the analyte is obtained in a purified form at the outlet (100).

A general aspect of the present disclosure is a device for the separation of magnetic or paramagnetic microparticles and the elution of an analyte adsorbed on said particles, the device being a liquid system (LS) comprising means for making fluidic connections (30), a first and a second inlet (10, 20), a rotary valve switching unit suitable for producing two different fluid connecting states (110), and an extractor (90) with an entry port (91) and an exit port (92), and with a controllable means (96) which can be used to temporarily apply a local magnetic field, characterized in that the extractor comprises a fluid connecting line (95) between the entry port (91) and the exit port (92), and the controllable means (96) is capable of temporarily applying a local magnetic field to two or more consecutive sections (97) of the line (95).

A further aspect of the present disclosure is a device with a liquid system (LS) comprising means for making fluidic connections (30), a first and a second inlet (10, 20), at least one pressure-generating means (40), an injection device (50), two storage containers (60, 70) for a first and a second mobile phase (65, 75) in a liquid state of aggregation, a collecting vessel (80), an extractor (90), an outlet (100) and a means suitable for producing two different fluid connecting states (switching unit (110), characterized in that the first inlet (10) is designed such that the first mobile phase (65) can be fed under pressure from the first storage container (60) to the LS via a fluidic connection; the first inlet (10) is additionally fluidically connected to an injection device (50), the injection device being designed such that it allows a mixture (120) of liquid sample material (121) and microparticles suspended therein (122) to be introduced into the first mobile phase that was introduced through the inlet; the second inlet (20) is designed such that the second mobile phase (75) can be fed under pressure from the second storage container (70) to the LS via a fluidic connection; the first inlet (10) is connected to a first entry port (E1) of the switching unit (110) and the second inlet (20) is fluidically connected to a second entry port (E2) of the switching unit; the extractor (90) has one entry port (91) and one exit port (92) where the entry port (91) of the extractor is fluidically connected to a first exit port (A1) of the switching unit and the exit port (92) of the extractor is fluidically connected to a third entry port (E3) of the switching unit; the extractor additionally comprises a fluid connecting line (95) between the entry port (91) and the exit port (92), also a controllable means (96) which can be used to temporarily apply a local magnetic field to two or more consecutive sections (97a, 97b) of this line; the second exit port (A2) of the switching unit (110) is the outlet (100) or is fluidically connected to the outlet (100); the third exit port (A3) of the switching unit (110) is fluidically connected to the collecting vessel (80); and the switching unit (110) is suitable in a first connecting state (I) for fluidically connecting E1 and A1, E2 and A2 as well as E3 and A3 and in the second connecting state (II) it is suitable for fluidically connecting E2 and A1, E3 and A2 as well as E1 and A3.

Yet, a further aspect of the present disclosure is the use of the device according to the present disclosure for the manipulation of magnetic microparticles and two different mobile phases in a liquid state of aggregation.

Yet, a further aspect of the present disclosure is a method for obtaining a purified analyte from a complex liquid sample material containing the said analyte comprising the steps (a) contacting the liquid sample material (121) containing the analyte with microparticles (122) made of a magnetic or paramagnetic material with a functionalized surface (123) whereby the analyte adsorbs to the surface; followed by (b) introducing the sample material with the microparticles into a device according to the present disclosureusing the injection device (50); followed by (c) pumping a first mobile phase (65) from a first storage vessel (60) into the first inlet (10) of the device where the switching unit (110) of the device makes the connecting state (I) and in the extractor (90) a magnetic field is applied to a first section (97a) of the line (95) located therein which is suitable for immobilizing the magnetic or paramagnetic microparticles (122) contained in the mobile phase entering through the line (95) on the nearest inner wall (93) of the line (95) facing the magnetic field in the first section (97a); followed by (d) immobilizing the microparticles (122) in the extractor (90) in the first section (97a) of the inner wall (93) of the line (95); followed by (e) separating the microparticles (122) from the remaining sample material by further pumping the first mobile phase (65) from the first storage vessel (60) into the first inlet (10) whereby the immobilized microparticles are washed and the remaining sample material is fed into the collecting container (80); followed by (f) switching over the switching unit (110) into the connecting state (II) and pumping a second mobile phase (75) from the second storage vessel (70) into the second inlet (20) of the device where the second mobile phase (75) is suitable for detaching the adsorbed analyte from the surface of the microparticles (122); followed by (g) eluting the analyte by contacting the microparticles (122) with the second mobile phase (75) and at the same time weakening or removing the magnetic field from the first section (97a) of the line (95) in the extractor (90) and moving the microparticles (122) in the line (95) towards a second section (97b) of the line (95) by the movement of the mobile phase (75); (h) applying a magnetic field to the second section (97b) of the line (95) where the magnetic field is suitable for immobilizing magnetic or paramagnetic microparticles (122) contained in the mobile phase entering through the line (95) on the nearest inner wall (93) of the line (95) facing the magnetic field in the second section (97b); followed by (i) immobilizing the microparticles (122) on the inner wall (93) in the second section (97b) of the line; followed by (k) moving the second mobile phase containing the eluted analyte to the outlet (100) of the device by further pumping the second mobile phase (75) from the second storage vessel (70) into the second entry port (20) by means of which the analyte is obtained in a purified form at the outlet (100).

Yet, a further aspect of the present disclosureis a method for detecting an analyte in a complex liquid sample material containing the said analyte comprising the steps (a) providing a device which is characterized in that the outlet (100) of the HLS is fluidically connected to a separation unit (130) and the separation unit is fluidically connected to a detector (140), and the exit port (145) of the detector is fluidically connected to the collecting vessel (80). (b) Preparing the purified analyte from the sample material using a device according to the present disclosurewherein the analyte is obtained in a purified form at the outlet (100) of the device and the switching unit (110) makes the connecting state (II); (c) moving the second mobile phase containing (i) the analyte and (ii) optionally further substances eluted together with the analyte through the separation unit (130) and into the detector (140) where the movement is driven by pumping the second mobile phase (75) from the second storage vessel (70) into the second entry port (20); (d) detecting the analyte by the detector (140).

### Detailed description of the invention

Certain terms are used with particular meaning, or are defined for the first time, in this description of the present invention. For the purposes of the present invention, the terms used are defined by their art-accepted definitions, when such exist, except that when those definitions conflict or partially conflict with the definitions set forth below. In the event of a conflict in definition, the meaning of a terms is first defined by any of the definitions set forth in this description of the present invention.

The term "comprising" is used in the description of the invention and in the claims to mean "including, but not necessarily limited to".

The articles "a" and "an" are used herein to refer to one or to more than one (i.e. to at least one) of the grammatical object of the article. By way of example, "a compound" means one compound or more than one compound.

When designating a range of numerical values such as a concentration range, the range is indicated by the word "between", followed by a first value n1 and a second value n2. The lower boundary of the designated range is understood as being the value equal to or higher than the first value. The higher boundary of the designated range is understood as being the value equal to or lower than the second value". Thus, a value x the designated range is given by n1 ≤ x ≤ n2.

If not stated otherwise, it is understood that the term "about" in combination with a numerical value n indicates a value x in the interval given by the numerical value ±5% of the value, i.e. n - 0.05 * n ≤ x ≤ n + 0.05 * n. In case the term "about" in combination with a numerical value n describes a preferred embodiment of the invention, the value of n is most preferred, if not indicated otherwise.

The term "segment" refers to a circle segment, that is to say a continuous section of the circumference of a circle.

The invention provides a liquid system which can be used to manipulate magnetic or paramagnetic microparticles and two different mobile phases, preferably liquid phases. As an example the present invention is illustrated on the basis of the use of corresponding microparticles with a hydrocarbon-functionalized surface. Such microparticles have previously not been used for quantitative analyses in clinical chemistry. However, they have considerable advantages when preparing clinical sample material. These advantages are particularly manifest when the aim is to detect an analyte having a low molecular weight, typically between about 50 and about 1,000 Daltons (Da). Further preferred ranges of the molecular weight of the analyte(s) are between about 50 and about 800 Da, between about 50 and about 750 Da, between about 50 and about 600 Da, and between about 50 and about 500 Da. A person skilled in the art can profit from using such particles especially in a quantitative chromatographic analysis.

In a simple form of sample preparation, magnetic or paramagnetic microparticles (extraction particles) with hydrocarbon-functionalized surfaces are brought into contact with liquid sample material for example whole blood, serum, plasma or haemolysed blood in a reaction vessel. Subsequently the analyte is adsorbed from the liquid phase onto the functionalized surface of the particles. After a certain holding time the solid and liquid phases are separated from one another. This can preferably take place by removing the liquid phase from the vessel while the particles are retained in the vessel by a magnetic field. For example a permanent magnet can be moved from outside to the wall of the vessel such that the magnetic particles are immobilized at this site on the vessel inner wall. The particles can be subsequently washed. For this purpose the magnet can for example be removed and after that the particles are resuspended in a washing buffer. After a renewed immobilization of the particles and removal of the washing buffer, the analyte is eluted from the surface of the particles by contacting the microparticles with a solvent suitable for the desorption of the analyte. After separating the solid and liquid phases, the analyte can be detected from the solvent using chromatographic methods.

The direct automation of the manual operating steps as described above does not yet eliminate the disadvantages of the prior art in a satisfactory manner. In contrast, the present invention describes a method for automating the extraction in a liquid system, preferably a high pressure liquid system, which surprisingly has many advantages. In particular the device according to the invention requires a minimum of moving parts and thus makes the use of complicated pipetting units that can be moved in three dimensions or complicated vacuum system superfluous.

A particularly preferred embodiment of the present invention is a substantially closed high pressure liquid system and the use of the same to manipulate magnetic or paramagnetic microparticles suspended in a liquid sample material and two different mobile phases. A substantially closed system in the sense of the present invention is a high pressure liquid system in which there is no operationally open connection between the space filled by the mobile phase and the environment. The high pressure liquid system according to the invention is a substantially closed system because it has an injection device which allows a mixture of liquid sample material and extraction particles to be introduced in a controlled manner into the liquid system.

According to the invention two different mobile phases are used. The first mobile phase is selected such that it can be used to separate extraction particles and the remaining sample material. In this connection "remaining sample material" means the material from the liquid sample from which at least portions of the analyte contained therein have been extracted by adsorption to the extraction particles. The second mobile phase is used to detach the analyte from the extraction particles. In this connection it is preferred that the first and second mobile phase have a liquid state of aggregation or are each in a liquid state of aggregation in the liquid system according to the invention. This also implies the use of mobile phases which are volatile at room temperature and normal ambient pressure. In the liquid system according to the invention such a particular mobile phase is kept under conditions of temperature and/or pressure such that inside the liquid system the mobile phase is in a liquid state of aggregation.

When the liquid system according to the invention is used, the material that is introduced remains within the system from the time at which the mixture of extraction particles and sample material is injected until the chromatographic analysis of the analyte.

The described process allows magnetic or paramagnetic microparticles which are used for extraction for analytical purposes to be simply manipulated preferably in the high pressure liquid system according to the invention. An automated operation of the device according to the invention is readily possible. The principle of manipulating the microparticles allows analytical extraction systems to be constructed in which a minimum of moved components have to be used. In particular complicated x-y-z pipetting units or vacuum systems are no longer necessary in contrast to the previously common automated extraction systems. Moreover, the system according to the invention can be extremely compactly configured and the requirement for solid or liquid consumables is minimized. Furthermore, the closed system design allows the use of liquid phases with a relatively high vapour pressure which would lead to problems in open systems such as automated pipettors for example due to the build up of pressure by evaporation of the liquid phase in the pipetting chamber. Compared to previous systems, the system according to the invention also enables very short cycle times and thus a high sample throughput.

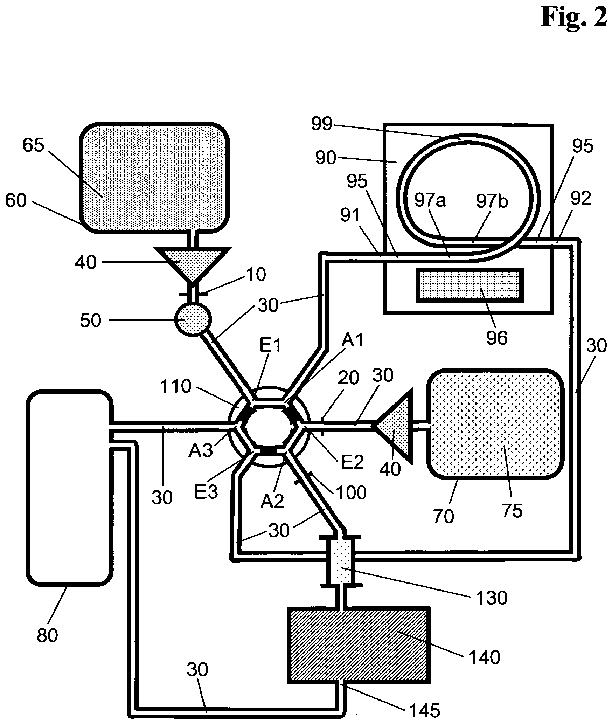

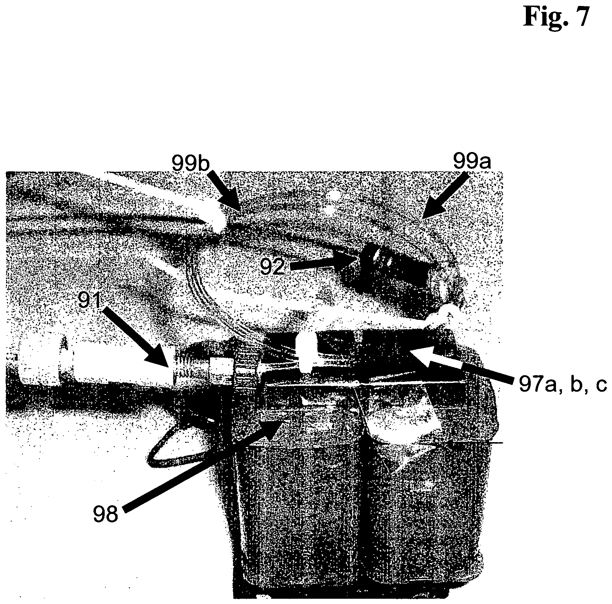

The construction of a particularly preferred device according to the present disclosure is shown in Figure 2. The device can be constructed to a large extent from commercial HPLC components. One component with a special function is the extractor (90). In a particularly preferred embodiment this is a toroidal core transformer which builds up a strong magnetic field when current flows and on which a HPLC line in the form of a loop is attached (Figure 7). A HPLC line with an inner diameter between 0.2 mm and 2.0 mm is especially preferred. Preferred materials for the line are polyphenyl sulfone (PPSU), polyether ether ketone (PEEK) and silicone.

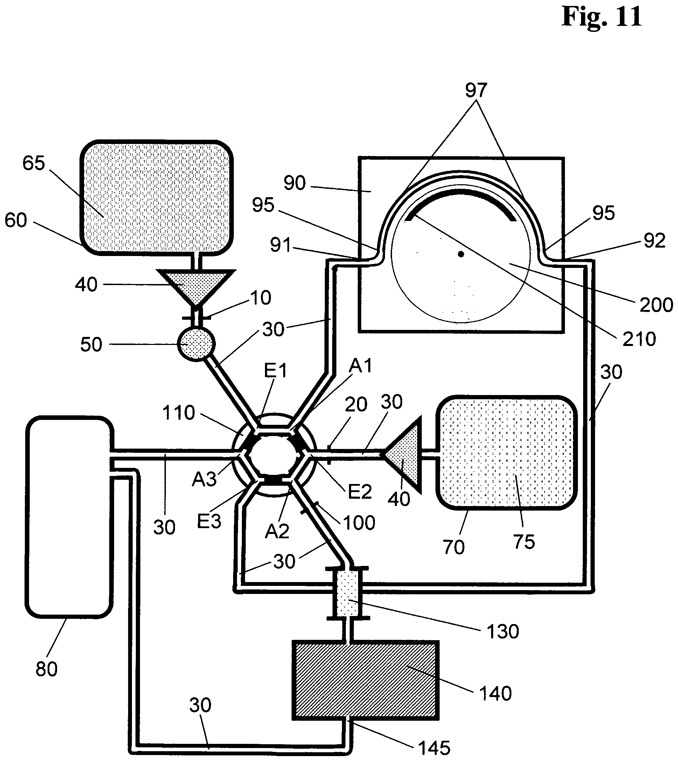

Another embodiment of the invention which is even more preferred is a device with a rotary extractor (Figure 11). In Examples 4 and 5, the application of functionalized ferromagnetic micro-particles for the preparation of biological samples for quantitative chromatographic analysis of small molecules, with handling of these particles in a complex closed high pressure flow system with the rotary extractor is described. Sufficient and constant extraction recovery, and good clean-up efficacy was observed. Even without use of an internal standard compound, the principle enabled the implementation of a linear and reproducible method for the quantification of itraconazole as representative analyte with ultraviolet detection as a representative technique of detection in human plasma as a representative sample material.

In a preferred embodiment of the invention, manual injection of single samples can be used. If an autosampler with pipetting capability becomes integrated into such a system, the configuration described herein is suited to configure a compact front-end sample preparation and chromatography module for different detection techniques. Such an embodiment is even more preferred. In particular, development of a comprehensive LC-MS/MS analyzer including this sample introduction system is highly attractive.

Advantages of the working principle and the devices according to the invention over different so far used techniques of automatable extraction procedures prior to chromatographic analyses include: potentially very short cycle time; no solid consumables are required; no need for extensive robotic solutions; and potentially very compact footprint of a comprehensive sample clean-up and chromatography system.

### Description of the figures

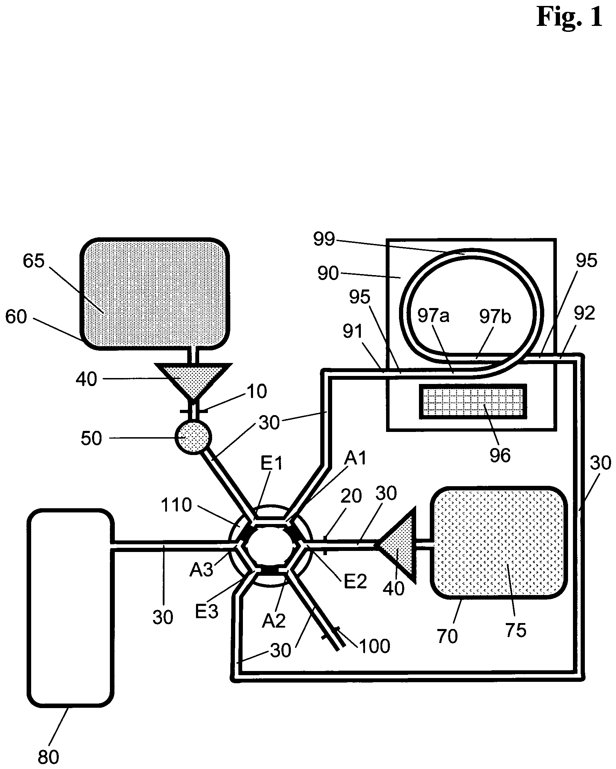

- **Figure 1**: Device with a liquid system (LS) comprising means for making fluidic connections (30), a first and a second inlet (10, 20), at least one pressure-generating means (40), an injection device (50), two storage containers (60, 70) for a first and a second mobile phase (65, 75) in a liquid state of aggregation, a collecting vessel (80), an extractor (90), an outlet (100) and a means suitable for producing two different fluid connecting states (switching unit, 110). In the preferred embodiment shown the pressure-generating means consists of two pumps which are each arranged between the storage container and inlet. Alternatively it would be possible to pressurize the storage container. In the extractor (90) the line (95) between the entry port (91) and exit port (92) of the extractor (90) has a helical configuration with one winding (99) where each of the sections (97a, 97b) of the line leading to the entry port and exit port are arranged side by side. The sections of the line labelled (97a) and (97b) leading to the entry port (91) and exit port (92) of the extractor are also referred to as a whole as (97).
- **Figure 2**: Preferred high pressure LS (HLS) in which the HLS is a substantially closed system and the outlet (100) is fluidically connected to a separator unit (130) and the separating unit is fluidically connected to a detector (140) and the exit port (145) of the detector is fluidically connected to the collecting vessel (80). With regard to the extractor reference is made to the description of Figure 1.

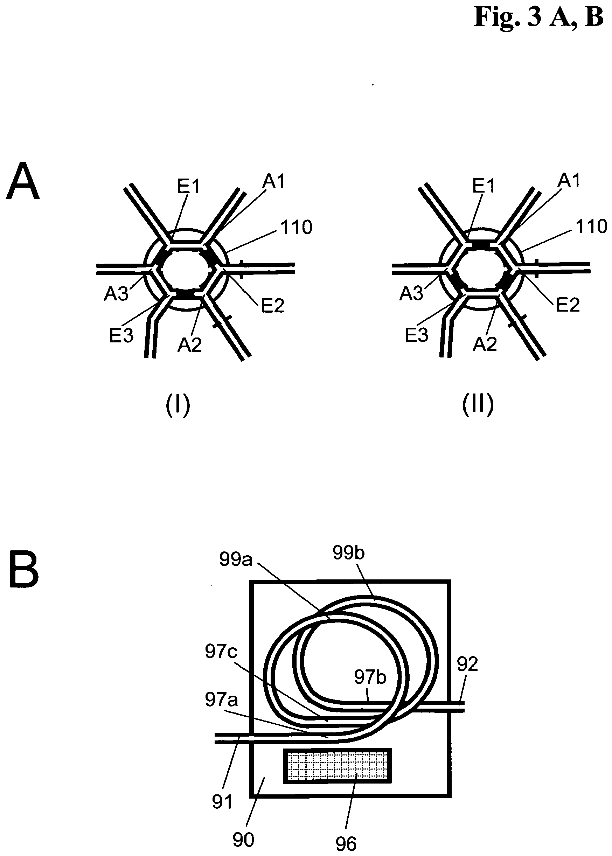

- **Figure 3**: A - Enlarged section from Figure 1 and Figure 2 which shows the two connecting states that can be made by the switching unit (110). In state (I) A1 and E1, A2 and E2 as well as A3 and E3 are simultaneously fluidically connected; in state (II) A3 and E1, A1 and E2 as well as A2 and E3 are simultaneously fluidically connected. B - Particularly preferred form of the extractor (90) in which the line (95) between the entry port (91) and exit port (92) of the extractor (90) has a helical configuration with two or more windings (99a, 99b) where one or more sections (97c) of the windings and the respective sections (97a, 97b) of the line leading to the entry port (91) and exit port (92) are arranged side by side.

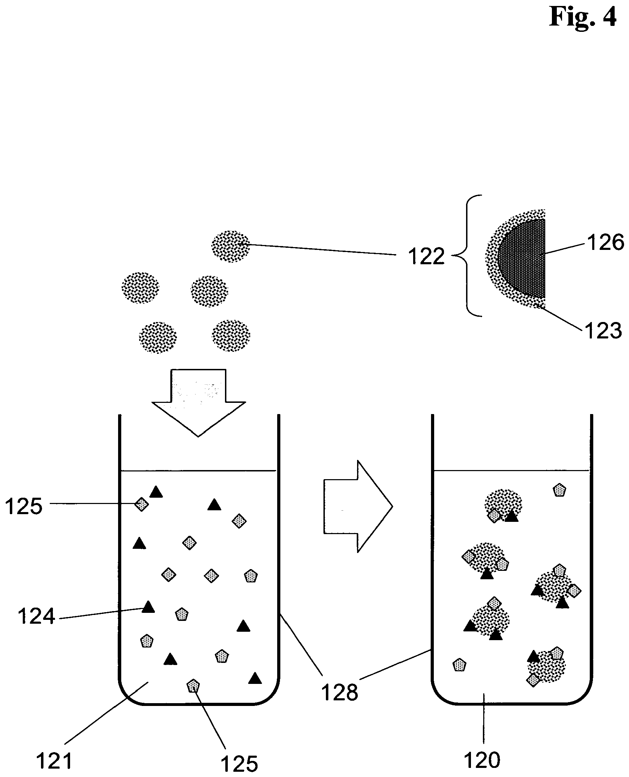

- **Figure 4**: Schematic representation of the extraction particles (122) and their use for the adsorption of the analyte (124) and optionally further substances (125) contained in the liquid sample material (121) which can adsorb to the surface (123) of the extraction particles. For this purpose the surface (123) of the extraction particles is functionalized e.g. in a particularly preferred embodiment it is coated at least partially with a hydrophobic layer. The core of the extraction particles contains a magnetic or paramagnetic material. The mixture (120) of sample material (121) and extraction particles (122) with adsorbed analyte (124) is introduced into the device using the injection device (50) see Figure 1 and Figure 2.

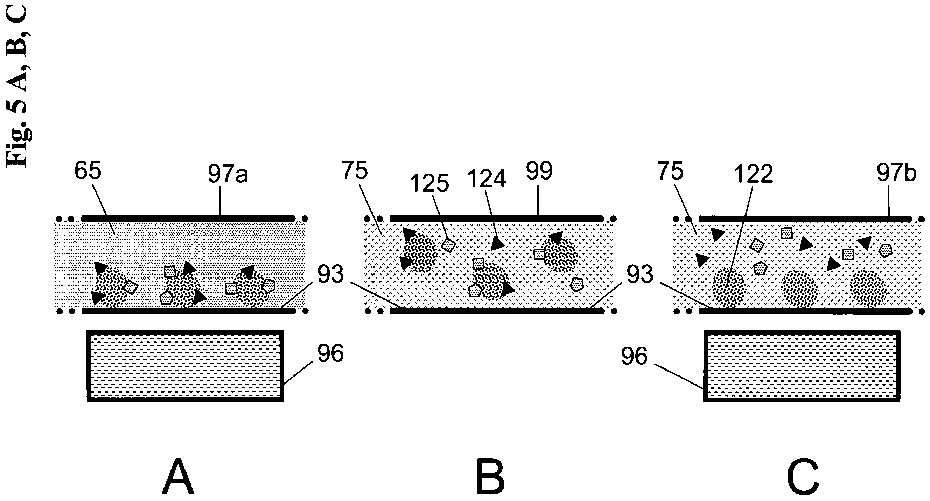

- **Figure 5**: Schematic representation of the action of the extractor (90). A - A magnetic field mediated by the means (96) (symbolized by the horizontal texture of (96)) is applied to the area (97a) and immobilizes the extraction particles with the adsorbed substances to the side of the inner wall (93) of the line (95) facing the magnetic field. At the same time the first mobile phase (65) together with the remaining sample material is moved towards the outlet of the extractor and the collecting vessel (80). During this operating step the extraction particles are separated from the remaining sample material. Since in this process additional first mobile phase is continuously pumped into the LS, the particles are finally completely surrounded by the first mobile phase. B - Subsequently the extraction particles with the adsorbed analyte are brought into contact with the second mobile phase and the magnetic field is switched off (or sufficiently reduced) so that the extraction particles are again mobilized by the flow of the second mobile phase in the line (95) and reach the loop (99). This area is shown in which the adsorbed substances (124, 125) are in the process of being detached from the extraction particles (122). This process takes place continuously while the extraction particles pass through the loop (99). C - Subsequently the extraction particles are transported by the flow of the second mobile phase (75) through the line (95) to the area (97b) where they are again immobilized by a magnetic field (generated using (96)). The substances detached from the extraction particles including the analyte are now present in a purified form in the second mobile phase. They are subsequently again transported in the direction of flow in order to for example pass through an analytical separation device and a detector.

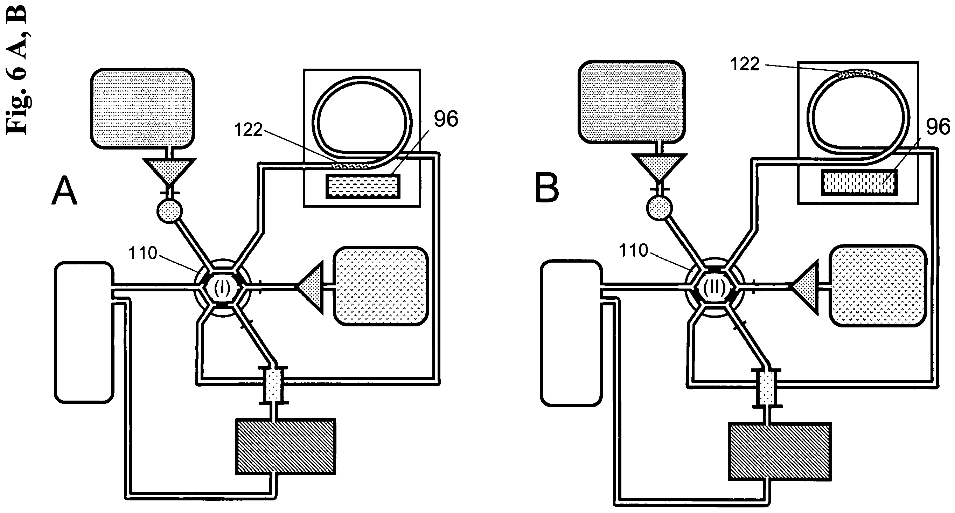

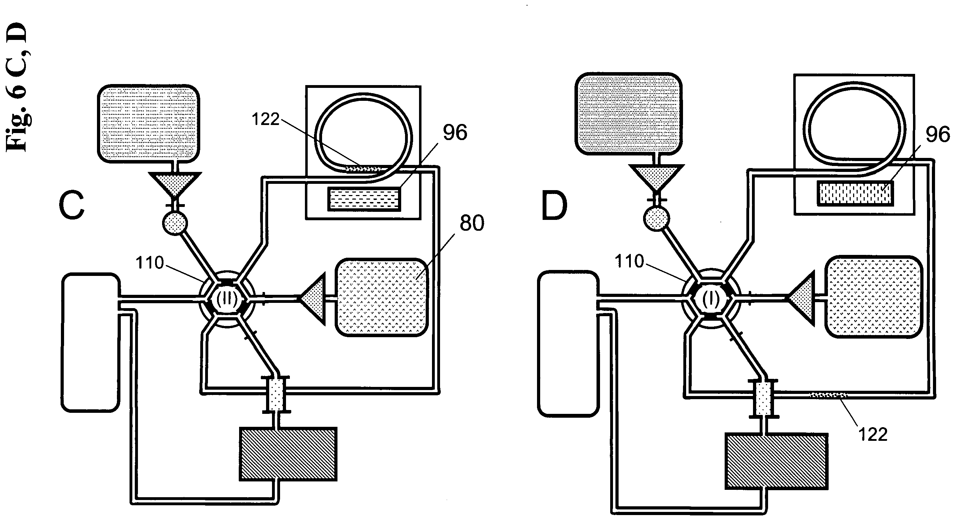

- **Figure 6**: Schematic representation of the process of sample purification by means of the device shown in Figure 2. The elements of the device that are shown correspond exactly to the elements shown in Figures 1, 2 and 3 and described in relation thereto. The steps shown in A - D are described in Example 1.
- **Figure 7**: A possible and preferred embodiment of the extractor comprises an electromagnet with a toroidal core transformer (98). The electromagnet can for example be actuated by a control device where the control device preferably also sets the switching states of the switching unit (110). The loop of the line of the extractor is configured in the form of a first and second winding (99a, 99b). Further windings can be added to increase the holding time of the extraction particles in the loop. The line that is actually used in this extractor consists of a HPLC tube made of polyphenyl sulfone (PPSU). The entry port (91) and exit port (92) of the extractor are provided with couplings. In the example shown there are three areas in which the extraction particles can be immobilized by applying a magnetic field, 97a, 97b and 97c.

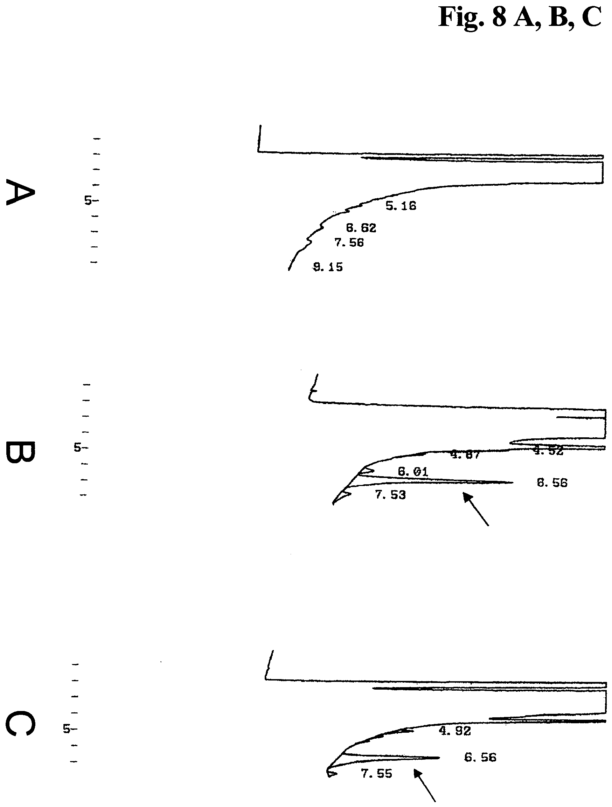

- **Figure 8**: Examples of chromatograms of samples which were processed and analysed with the aid of a high-pressure liquid system according to the present disclosure with an attached separation and detection unit (see Example 3). The X axis shows the retention time and the Y axis shows the absorption measured on the UV spectrometer. A - Chromatogram of a "drug-free" patient sample B - Chromatogram of the calibrator sample with a set itraconazole concentration of 2.9 mg/l. The peak area comprises 81234 counts and the retention time is 6.56 min. C - Chromatogram of the analysed patient sample. The determined itraconazole concentration is 2.0 mg/l. The peak area comprises 56352 counts and the retention time is 6.56 min.

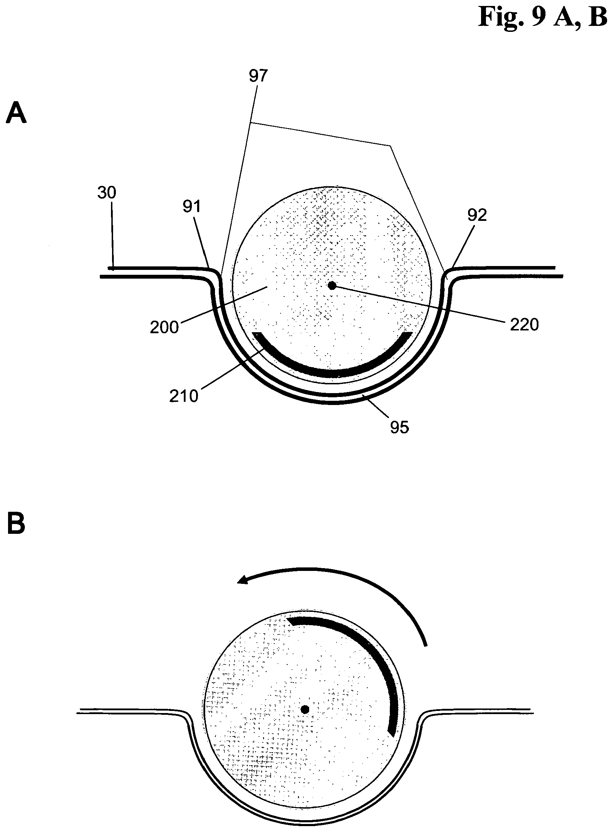

- **Figure 9**: Schematic representation of a particularly preferred embodiment of the extractor (90). The elements of the device that are shown correspond exactly to the elements shown in the previous Figures and described in relation thereto. The rotatable disk (200) is attached to agitating means (220) such that agitation results in rotational movement. A magnetic field is generated by one or more permanent magnets (210) located and attached in a sector of the disk, preferably close to the edge of the disk. In the configuration shown in (A) the magnetic field acts upon the line (95) in the section (97) between the entry port (91) and the exit port (92). As shown in B, rotational movement of the disk displaces the magnetic field such that the magnetic force acting upon the line (95) is reduced. Reduction is maximal when the one or more magnets are positioned opposite of their position in (A).

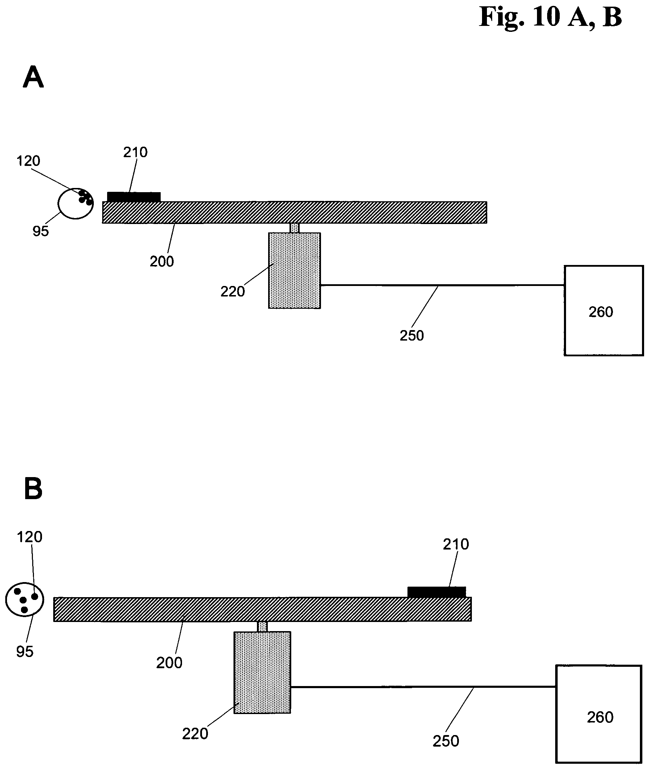

- **Figure 10**: Schematic representation of a cross-section of the extractor (90) depicted in Figure 9. The elements of the device that are shown correspond exactly to the elements shown in the previous Figures and described in relation thereto. The agitator (220) is connected with a controlling device (260), preferably by means of a connecting cable (250). In a first position of the disk (200) shown in (A) the one or more permanent magnets (210) are positioned close to the connecting line (95) such that the magnetic field extends through the space occupied by the line. Magnetic particles (120) present in the line (95) are attracted to the inner wall of the line and immobilized by the magnetic field. Following rotation of the disk by 180° the one or more magnets are positioned on the opposite side, the magnetic force acting upon the magnetic particles is weakened and the particles are released, as shown in (B).
- **Figure 11**: A very much preferred embodiment of a device and analogous to the devices shown in Figures 1 and 2, Figure 2 in particular. The elements of the device that are shown correspond exactly to the elements shown in the previous Figures and described in relation thereto. The device comprises an extractor as shown in Figures 9, 10, and 17 and explained in the respective figure legends.

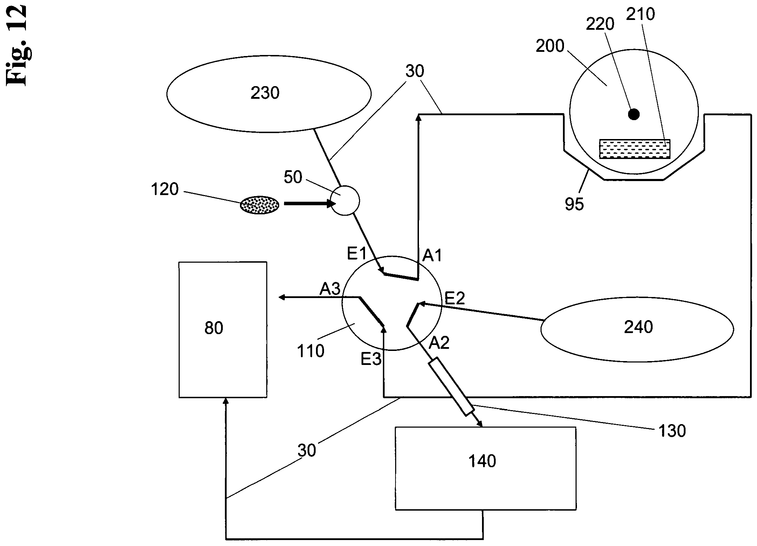

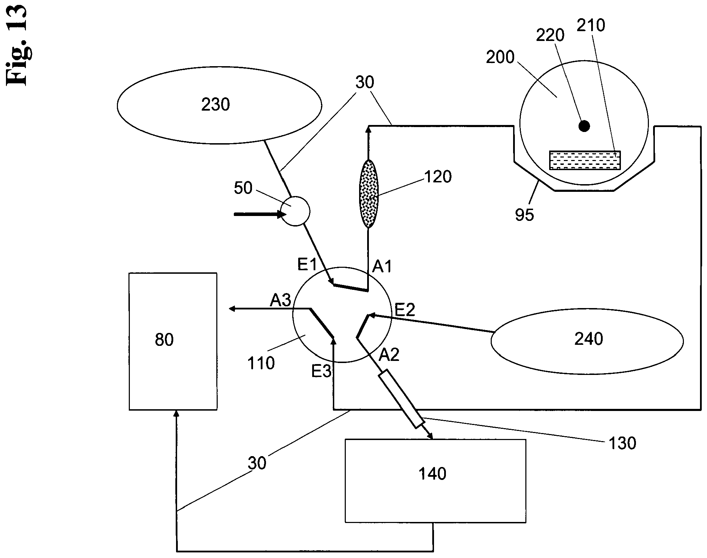

- **Figure 12**: Working principle of the device shown in Figure 11. The subsequent stages of working cycle are demonstrated by Figures 11 to 16. The elements of the device that are shown correspond exactly to the elements shown in the previous Figures and described in relation thereto. For simplicity, the reservoir with the first mobile phase and the first pressure generating means for transporting the first mobile phase into the liquid system are summarily referred to as element (230). Likewise, element (249) refers to the reservoir with the second mobile phase and the second pressure generating means. The above applies similarly to Figures 13-16. A mixture of liquid sample material containing an analyte and also containing magnetic particles (120) is injected into the liquid system. The switching unit is in the first connecting state and the first mobile phase is pumped into the system.
- **Figure 13**: The injected mixture (120) is transported by the flow of the first mobile phase towards the extractor. Before and during the transport the magnetic particles interact with the sample and the analyte is adsorbed on the functionalized surfaceof the particles. The disk (200) with the one or more magnets is in a first position as shown in Figure 10 A..

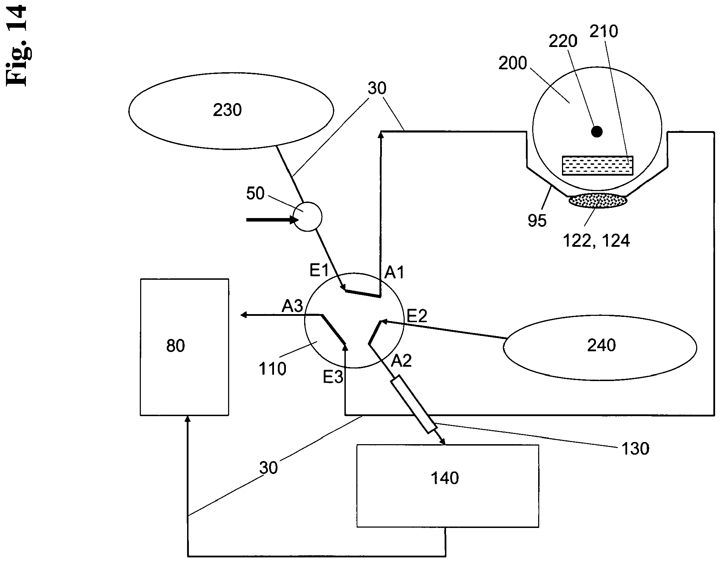

- **Figure 14**: When the mixture with magnetic particles reaches the line (95) the particles are immobilized by the magnetic force of the field generated by the magnet or magnets located in proximity to the line (95). The magnetic particles are immobilized on the inner wall of the line (95). This detail is also shown in Figure 10 A. Once the particles are immobilized, further flow of the first mobile phase through the line (95) removes non-adsorbed components of the sample material (washing). As a result, magnetic particles (122) with the analyte(s) (124) adsorbed are separated and provided for the following extraction step.

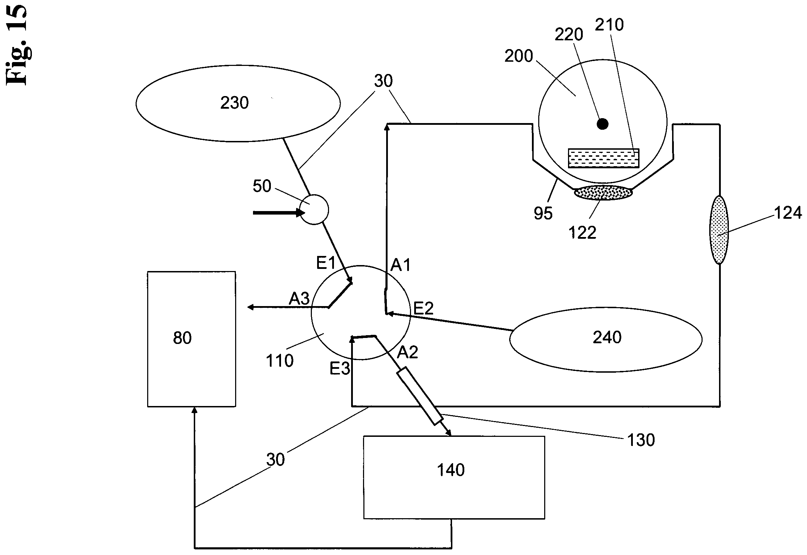

- **Figure 15**: For the extraction of the adsorbed analyte(s) the fluid connecting state of the switching unit (110) is switched to the second connecting state and the second mobile phase is pumped into the system. As the second mobile phase reaches the immobilized magnetic particles in the line (95) of the extractor (90) the adsorbed one or more analyte(s) (124) are eluted and transported to a separation unit (130) (e.g. a chromatographic column) which is attached to a detector (140). The Figure shows the eluted analyte(s) (124) already being transported by flow, downstreamof the extractor. The magnetic particles (122) are held back in the extractor.

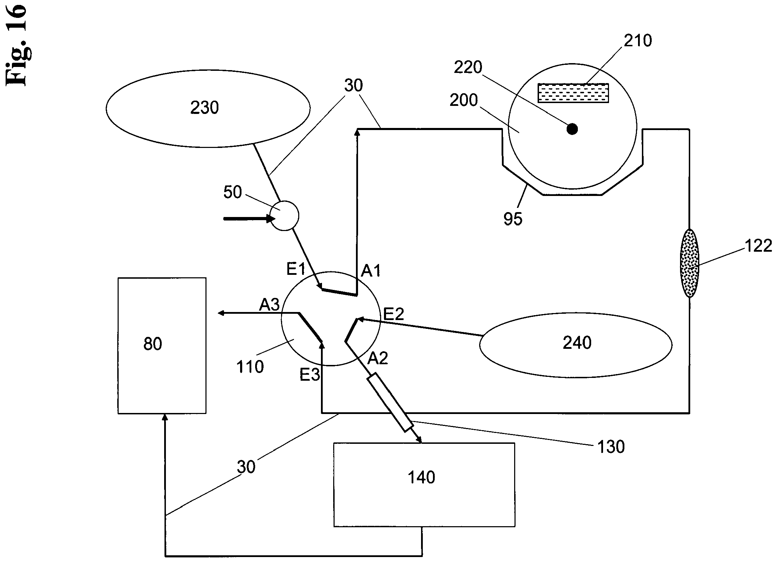

- **Figure 16**: Following analysis of the analyte(s) the liquid system is regenerated. The switching unit (110) is switched back to the first connecting state and the disk (200) in the extractor is adjusted in the second position. In this position the magnetic field is diverted from the line (95), also shown in Figure 10 B. The magnetic particles become mobile again. The first mobile phase is pumped again into the system, thereby flushing the second mobile phase and the magnetic particles (122) into the waste reservoir (80).

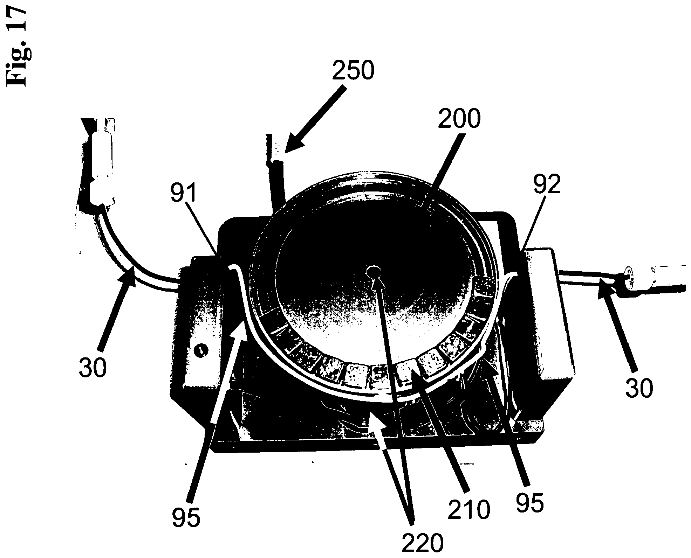

- **Figure 17**: Picture of an extractor according to Figure 9 and Figure 10 A, B, whereby several magnets of cubic shape are positioned in a sector of the disk (200). The elements of the device that are shown correspond exactly to the elements shown in the previous Figures and described in relation thereto.

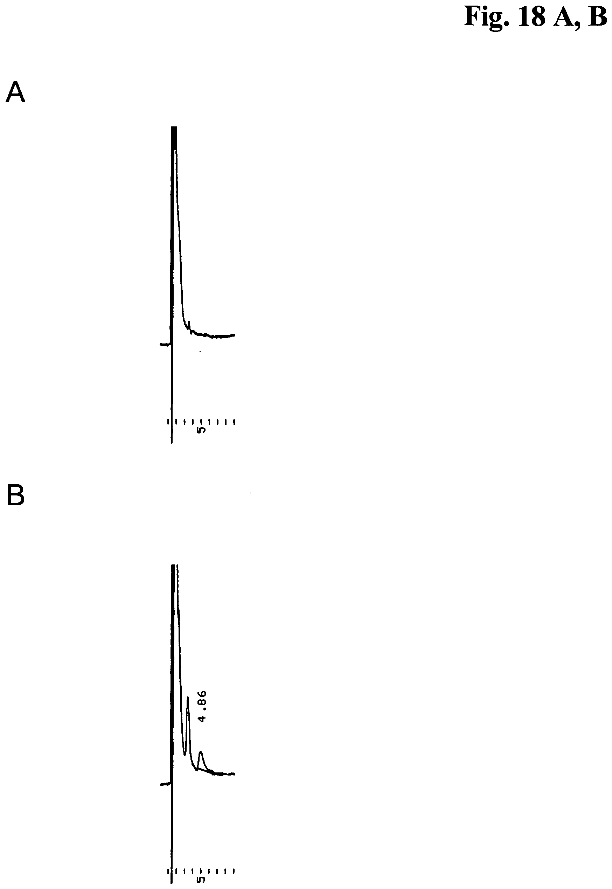

- **Figure 18**: Representative chromatograms of a quantitative analysis of itraconazole in human plasma using the magnetic particle extraction and the device according to Figure 11 in the process shown and explained in Figures 12-16. Analyte was detected by a UV-detector. (A) blank plasma. (B) patient's plasma pool (itraconazole, 378 µg/l; the first peak corresponds to the drug metabolite hydroxyl-itraconazole, the peak eluting after 4.86 min corresponds to itraconazole.

### Example 1

### Description of the use of a device according to the present disclosure

In general the device can be designed to be used cyclically where the stages of a cycle can be subdivided as an example into A - D. In this connection reference is made to Figures 1 - 7 and in particular to Figure 6 A - D.

A - After the mixture of sample material and extraction particles has been injected, the mixture reaches the extractor where the particles (122) are immobilized for the first time. This stage corresponds to the situation in the extractor shown in Figure 5A. The switching unit is in position (I) as a result of which the first mobile phase is passed into the system. A magnetic field symbolized by the horizontal texture of (96) is applied by means of the means (96) .

B - The switching unit is in position (II) as a result of which the second mobile phase is passed into the system. After separation of the remaining sample material from the particles and the change from the first to the second mobile phase, the extraction particles (122) reach the loop of the extractor corresponding to the situation shown in Figure 5B. In this process step no magnetic field is applied or the magnetic field is reduced to such an extent that the extraction particles are again mobile symbolized by the perpendicular texture of (96). The holding time of the extraction particles in the loop (99) is preferably adjusted such that at least 20 %, more preferably at least 30 %, even more preferably at least 50 % and even more preferably 75 % and even more preferably at least 90 % of the analyte is eluted into the second mobile phase. For quantitative determinations it is advantageous that the amount of the eluted analyte is proportional to the concentration of the analyte in the sample material for the same elution times.

C - In the subsequent step a magnetic field is again applied to the line in front of the exit port of the extractor (see texture of (96)). The particles (122) suspended in the mobile phase that flows past are again immobilized corresponding to the situation shown in Figure 5C. The switching unit is also in position (II) in this process step as a result of which the substances (also including the analyte) detached from the particles together with the second mobile phase are conveyed to the separation unit and to the detector. The magnetic field generated by (96) is maintained during this and the particles (122) are retained.

D - After the separation and detection step is completed, the device is regenerated. The switching unit is brought into position (I) and the first mobile phase is passed into (pumped into) the liquid system. In this process step no magnetic field is applied or the magnetic field is reduced to such an extent that the extraction particles are again mobile, symbolized by the perpendicular texture of (96). The particles (122) are transported together with the liquid phase which surrounds them into the collecting vessel (80). The particles can be optionally concentrated in the container by a local magnetic field in order to for example make them more accessible to a recovery.

### Example 2

### Processing and analysis of sample material

Serum as an example of a biological sample material is mixed with a suspension of C18-functionalized ferromagnetic microparticles (extraction particles). In the mixing process analyte molecules of low polarity are adsorbed to the hydrophobic chains of the microparticles. The mixture of sample and particles is injected via an injection valve into the device according to the present disclosure. The first mobile phase of this system is an aqueous solution. The mixture of sample and particles is transferred to an electromagnet by passing in the first mobile phase. Here the ferromagnetic particles loaded with analyte are retained and immobilized in the tubing system with the aid of the activated electromagnet. The non-particle-bound sample matrix is transported by the continuous flow of the first mobile phase into the collecting vessel (waste). The aqueous mobile phase is then replaced in the tubing system by an organic solvent as the second mobile phase with the aid of a 6 port HPLC switching valve. The electromagnet is de-energized for a short period; the particles are resuspended in the organic solvent in the loop of the extractor and the target analyte is detached from the functionalized particles. After a few seconds the electromagnet is again switched on and the particles which have in the meantime become mobile in the tube loop are again immobilized. The target analyte molecules eluted from the particles are transferred directly onto an analytic chromatography column. A chromatographic detector is connected in series to this separation column. A prototype of an extraction system was constructed on the basis of this working principle and its extractor is shown in Figure 7.

### Example 3

### Test measurement using a device according to the present disclosure

The antimicrobial pharmacological agent itraconazole was examined as an example of an analyte of *in-vitro* diagnostics. This substance was quantified in a therapeutic concentration range from a human sample matrix. For this purpose serum samples containing known itraconazole concentrations determined by means of LC tandem mass spectrometry as well as "drug-free" sera were examined.

C18-modified magnetic or paramagnetic extraction particles from the Dynal Company (Oslo, Norway) were used (Dynabeads® 18, 50 mg/ml). 15 µl of this bead suspension was pipetted into a reaction vessel; this was positioned on a permanent magnetic particle extractor (Dynal MPC-S Magnetic Particle Concentrator). The particle-free solvent medium was removed. The particles were then washed twice with 200 µl 0.1 % trichloroacetic acid in each case; for this purpose the reaction vessel was repeatedly removed from the extractor and again positioned therein in order to immobilize the particles. Finally the particles were suspended in 1000 µl water.

In order to analyse the serum samples using the system described in the present disclosure, 15 µl sample was mixed with 15 µl of the prepared aqueous particle suspension in a reaction vessel. This mixture was in each case injected into the described device by a manual injection valve and processed according to the work process described above. The aspiration of sample aliquots, the mixing of sample and extraction particles and the injection which are carried out manually in a first prototype setup can also be carried out fully automatically using a conventional autosampler.

Figures 8 A - C show examples of chromatograms of the analysis of a blank sample (a), a calibrator sample (b) containing an itraconazole concentration of 2.9 mg/l as well as a pooled patient sample (c). When the patient sample is quantified on the basis of the calibrator sample, a concentration of 2.0 mg/l is calculated. The same result was found for this sample using a recognized mass spectrometric analytical method for determining itraconazole (Vogeser M, Spöhrer U, Schiel X. Determination of itraconazole and hydroxyitraconazole in plasma by use of liquid chromatography-tandem mass spectrometry with on-line solid-phase extraction. Clin. Chem. Lab. Med. 2003; 41:915-20).

### Example 4

### Extractor with rotary disk

The principle was again to inject sample materials together with functionalized ferromagnetic micro-particles into a HPLC system. The particles were immobilized reversibly onto the inner surface of HPLC tubes by a magnet. Different mobile phases pumped through this HPLC tube were exchanged rapidly by use of two HPLC pumps interacting via a high pressure switching valve. By these means, the particles underwent the extractive steps of adsorption, washing, and elution within very short time intervals, and within a closed system. Extracts were eluted to different detectors.

Based on this principle, we configured a chromatographic system of two isocratic HPLC pumps, a manual injector, a high-pressure switching valve, an analytical HPLC column, an UV-detector with chromato-integrator, and furthermore a rotary extractor device. The components were connected with HPLC tubings as shown in Figure 11 and Figures 12-16. The rotary extractor used is shown in Figure 17. The HPLC pump 1 in element (230) and the HPLC pump 2 in element (240) each were a Waters 600 pump with a programmable controller, which also controlled the switching valve (110) and the rotary extractor.

In the particularly useful rotary extractor device (Figure 17), several cubic magnets were fixed on a plastic disk of approx. 15 cm diameter. The disk was rotated by an electric servo drive by 180°, thus alternating between a first and a second position. A transparent HPLC tube (inner diameter 0.75 mm) was fixed close around the disk semicircularly. The orientation of the magnet bearing disk and the HPLC tube was such that in the first position (see Figure 10 A, Figures 12-15)) the magnets were close to the tube (immobilisation of beads from the flow), while in the second position (Figure 10 B, Figure 16) the magnets were distant from the tube (re-mobilisation of beads into the flow).

Commercially available ferromagnetic microparticles with C18 modified surface were used (Dynal® Dynabeads® RPC18 (Prod. No. 102.01), Invitrogen, Karlsruhe, Germany; 12.5 mg/mL, mean particle diameter 1 µm). After conditioning of the particles according to the manufacturer's instruction with trichloroacetic acid, a 2.5 mg/ml suspension of the beads in distilled water was prepared.

For sample, extraction 40 µl of sample and of the bead suspension were aspirated into a 50 µL glass-syringe. This mixture was injected into the flow of HPLC pump 1. The manual injection valve gave a starting signal to the chromato-integrator and to the pump controller. Pump 1 continuously delivered methanol / water (10/90) with a flow of 2 ml/min throughout the entire process (Figures 12, 13). Via a high pressure switching valve the injected sample mixture was transferred to the extractor device. Analyte adsorption to the functionalized bead surface took place beginning in the injection syringe and continuing after injection within the tubings. The extractor device in the first position retained the analyte charged particles (122 with 124) on the inner surface of the HPLC tube, while the sample matrix was washed by the continuous flow of the mobile phase from pump 1 to waste (Figure 14). After one minute of washing, the high pressure switching valve (SW) (110) was switched into the second position by the pump controlling program (15). Now, HPLC pump 2 delivered 70% acetonitrile / 30% 0.1% formic acid to the extractor device. The high content of organic solvent eluted the analyte from the immobilized beads. The extract was transferred from the extractor onto the analytical column (130) and was submitted to analytical chromatography with subsequent UV detection and data recording. After one minute of elution, the switching valve was again set to the first position; simultaneously, the extractor was switched to the second position, leading to the re-mobilisation of the beads into the flow (Figure 16). The beads were thus purged into waste for one minute until the end of the sample preparation cycle after three minutes. Efficient immobilisation and re-mobilisation of the particles within the transparent tubing was observed visually.

### Example 5

### Analysis of samples from patients

The function of the system described in Example 4 was shown by quantifying the concentrations of the antimycotic drug itraconazole as a representative compound in patients' plasma samples. Specific conditions were as follows: Analytical column, LiChrosphere 100 70x3 mm, C18, 5 µM, Fa. Maisch, Ammerbuch, Germany; flow HPLC pump 1: 2.0 ml/min (10% methanol / 90% water); flow HPLC pump 2: 1.2 ml/min (70% acetonitrile / 30 % 0.1% formic acid); injection loop volume100 µl; injected volume 50 µl (mixture of sample and bead suspension); UV detection at 263 nm; retention time of itraconazole was approximtely 4.9 min.

To test the linearity and reproducibility of the analytical system, a calibration series of itraconazole spiked plasma samples (125 µg/l, 250 µg/l, 500 µg/l, 1,000 µg/l, and 2,000 µg/l) was analyzed; and samples from a patients' plasma pool were analyzed in eight replicates. A linear calibration function was observed (r²>0.99); in the pool samples a mean concentration of 378 µg/l was found, with a coefficient of variation of 7.9%. Representative chromatograms from a plasma blank and from a pool sample are shown in Figure 18 A, B.

To test the recovery of the extraction process, an isocratic pump was directly connected to the injector, the analytical column, and the detector. A pure solution of itraconazole in 10% methanol (3,000 µg/l) was injected in duplicate and the peak area was recorded. The same solution was then injected in duplicate to the described extraction configuration using ferromagnetic micro-particles. Mean peak areas were compared, and an extraction recovery of 72% was found.

## Claims

1. Device for the separation of magnetic or paramagnetic microparticles and the elution of an analyte adsorbed on said particles, the device being a liquid system (LS) comprising
a first and a second inlet (10, 20) for a first and a second liquid mobile phase (65, 75), wherein the mobile phases are in a liquid state of aggregation,
means for making fluidic connections (30),
a switching unit for producing two different fluid connecting states (110), the switching unit having three entry ports (E1, E2, E3) and three exit ports (A1, A2, A3),
magnetic or paramagnetic microparticles (122) and liquid sample material (121),
at least one pressure-generating means (40), an injection device (50), two storage containers (60, 70) for a first and a second mobile phase (65, 75), a collecting vessel (80), an outlet (100), and an extractor (90),
a1) wherein the extractor (90) comprises (i) an entry port (91), (ii) an exit port (92), (iii) a section (97) between said entry port and said exit port, the section comprising a fluid connecting line (95), and (iv) a means (96) capable of temporarily applying a local magnetic field to the fluid connecting line (95) in the section (97),
b1) wherein the first inlet (10) is designed such that the first mobile phase (65) can be fed under pressure from the first storage container (60) to the LS via a fluidic connection;
b2) wherein the first inlet (10) is additionally fluidically connected to an injection device (50), the injection device being designed such that it allows a mixture (120) of liquid sample material (121) and said magnetic or paramagnetic microparticles suspended therein (122) to be introduced into the first mobile phase that was introduced through the inlet;
b3) wherein the second inlet (20) is designed such that the second mobile phase (75) can be fed under pressure from the second storage container (70) to the LS via a fluidic connection;
b4) wherein the first inlet (10) is connected to the first entry port (E1) of the switching unit (110) and the second inlet (20) is fluidically connected to the second entry port (E2) of the switching unit;
c1) wherein the entry port (91) of the extractor (90) is fluidically connected to the first exit port (A1) of the switching unit, and the exit port (92) of the extractor is fluidically connected to the third entry port (E3) of the switching unit;
c2) the second exit port (A2) of the switching unit (110) is the outlet (100) or is fluidically connected to the outlet (100);
c3) the third exit port (A3) of the switching unit (110) is fluidically connected to the collecting vessel (80); and
d1) the switching unit (110) is suitable in a first connecting state (I) for fluidically connecting E1 and A1, E2 and A2 as well as E3 and A3 and in the second connecting state (II) it is suitable for fluidically connecting E2 and A1, E3 and A2 as well as E1 and A3,
and the device being further **characterized in that**
e1) the means (96) comprises a rotatable circular disk (200) with a controllable actuator capable of adjusting the disk, by way of rotation, in a first and a second position;
e2) a fraction of the circumference of the disk (200) is located in proximity to the fluid connecting line (95) of the section (97);
e3) in a segment of the disk one or more permanent magnets (210) are attached;
e4) in a first position of the disk the magnetic field of the one or more magnets is applied to the fluid connecting line (95) of the section (97); and
e5) in a second position the magnetic field applied to the fluid connecting line (95) of the section (97) is reduced.

2. Device according to claim 1, **characterized in that** the LS is a high pressure LS (HLS), the HLS is a closed system and the outlet (100) is fluidically connected to a separation unit (130), and the separation unit is fluidically connected to a detector (140), and the exit port (145) of the detector is fluidically connected to the collecting vessel (80).

3. Device according to one of the claims 1 or 2, **characterized in that** the section (97) of the fluid connecting line (95) in the extractor (90) is arranged in parallel to about half of the circumference of the edge of the rotatable circular disk (200).

4. Device according to claim 3, **characterized in that** the one or more permanent magnets (210) are located on the edge of the disk (200).

5. Device according to claim 4, **characterized in that** a plurality of magnets are localized in the segment.

6. Device according to any of the claims 1 to 5, **characterized in that** the disk additionally comprises a controllable actuator capable of effecting rotational movement of the disk.

7. Use of a device according to one of the claims 1 to 6 for manipulating magnetic microparticles and two different mobile phases in a liquid state of aggregation.

8. Method for obtaining a purified analyte from a complex liquid sample material containing the said analyte comprising the steps
(a) contacting the liquid sample material (121) containing the analyte with microparticles (122) made of a magnetic or paramagnetic material with a functionalized surface (123) whereby the analyte (124) adsorbs to the surface; followed by
(b) introducing the sample material with the microparticles into a device according to one of the claims 1 to 6 using the injection device (50); followed by
(c) pumping a first mobile phase (65) from a first storage vessel (60) into the first inlet (10) of the device where the switching unit (110) of the device makes the connecting state (I) and in the extractor (90) a magnetic field is applied to the connecting line (95) within the section (97), the magnetic field being suitable for immobilizing the magnetic or paramagnetic microparticles (122) contained in the mobile phase entering through the line (95) on the nearest inner wall (93) of the line (95) facing the magnetic field in the first section (97); followed by
(d) immobilizing the microparticles (122) in the extractor (90) on the inner wall (93) of the line (95) within the section (97) of the line; followed by
(e) separating the microparticles (122) from the remaining sample material by further pumping the first mobile phase (65) from the first storage vessel (60) into the first inlet (10) whereby the immobilized microparticles are washed with the first mobile phase and the remaining sample material is fed into the collecting container (80); followed by
(f) switching over the switching unit (110) into the connecting state (II) and pumping a second mobile phase (75) from the second storage vessel (70) into the second inlet (20) of the device where the second mobile phase (75) is suitable for detaching the adsorbed analyte from the surface of the microparticles (122); followed by
(g) eluting the analyte by contacting the microparticles (122) with the second mobile phase (75); followed by
(h) moving the second mobile phase containing the eluted analyte to the outlet (100) of the device by further pumping the second mobile phase (75) from the second storage vessel (70) into the second entry port (20) by means of which the analyte is obtained in a purified form at the outlet (100).

## Patentansprüche

1. Vorrichtung zum Abscheiden magnetischer oder paramagnetischer Mikropartikel und zur Elution eines Analyten, der auf den Partikeln adsorbiert ist, wobei die Vorrichtung ein Flüssigkeitssystem (LS) ist, das Folgendes umfasst
einen ersten und einen zweiten Einlass (10, 20) für eine erste und eine zweite flüssige mobile Phase (65, 75), wobei die mobilen Phasen in einem flüssigen Aggregatzustand sind,
Mittel zum Herstellen von Fluidverbindungen (30),
eine Umschalteinheit zum Erzeugen zweier verschiedener Fluidverbindungszustände (110), wobei die Umschalteinheit drei Eingangsports (El, E2, E3) und drei Ausgangsports (A1, A2, A3) aufweist,
magnetische oder paramagnetische Mikropartikel (122) und flüssiges Probenmaterial (121),
mindestens ein Druckerzeugungsmittel (40), eine Einspritzvorrichtung (50), zwei Lagerbehälter (60, 70) für eine erste und eine zweite mobile Phase (65, 75), ein Sammelgefäß (80), einen Auslass (100) und einen Extraktor (90),
al) wobei der Extraktor (90) (i) einen Eingangsport (91), (ii) einen Ausgangsport (92), (iii) einen Abschnitt (97) zwischen dem Eingangsport und dem Ausgangsport, wobei der Abschnitt eine Fluidverbindungsleitung (95) umfasst, und (iv) ein Mittel (96), das vorübergehend ein lokales magnetisches Feld an der Fluidverbindungsleitung (95) im Abschnitt (97) anlegen kann, umfasst,
b1) wobei der erste Einlass (10) derart ausgelegt ist, dass die erste mobile Phase (65) unter Druck aus dem ersten Lagerbehälter (60) über eine Fluidverbindung in das LS gespeist werden kann;
b2) wobei der erste Einlass (10) zusätzlich fluidisch mit der Einspritzvorrichtung (50) verbunden ist, wobei die Einspritzvorrichtung derart ausgelegt ist, dass sie das Einführen einer Mischung (120) des flüssigen Probenmaterials (121) und der darin suspendierten magnetischen oder paramagnetischen Mikropartikel (122) in die durch den Einlass eingeführte erste mobile Phase erlaubt;
b3) wobei der zweite Einlass (20) derart ausgelegt ist, dass die zweite mobile Phase (75) unter Druck aus dem zweiten Lagerbehälter (70) über eine Fluidverbindung in das LS gespeist werden kann;
b4) wobei der erste Einlass (10) mit dem ersten Eingangsport (E1) der Umschalteinheit (110) verbunden ist und der zweite Einlass (20) fluidisch mit einem zweiten Eingangsport (E2) der Umschalteinheit verbunden ist;
c1) wobei der Eingangsport (91) des Extraktors (90) fluidisch mit dem ersten Ausgangsport (A1) der Umschalteinheit verbunden ist und der Ausgangsport (92) des Extraktors fluidisch mit dem dritten Eingangsport (E3) der Umschalteinheit verbunden ist;
c2) der zweite Ausgangsport (A2) der Umschalteinheit (110) der Auslass (100) ist oder fluidisch mit dem Auslass (100) verbunden ist;
c3) der dritte Auslassport (A3) der Umschalteinheit (110) fluidisch mit dem Sammelgefäß (80) verbunden ist; und
dl) die Umschalteinheit (110) in einem ersten Verbindungszustand (I) geeignet ist, um E1 und A1, E2 und A2 sowie E3 und A3 fluidisch zu verbinden, und in dem zweiten Verbindungszustand (II) geeignet ist, um E2 und A1, E3 und A2 sowie E1 und A3 fluidisch zu verbinden,
und die Vorrichtung weiter **dadurch gekennzeichnet ist, dass**
e1) das Mittel (96) eine drehbare runde Scheibe (200) mit einem steuerbaren Stellglied umfasst, das die Scheibe mittels Rotation in eine erste und eine zweite Position einstellen kann;
e2) sich ein Teil des Umfangs der Scheibe (200) in der Nähe der Fluidverbindungsleitung (95) des Abschnitts (97) befindet;
e3) ein oder mehrere Permanentmagneten (210) in einem Segment der Scheibe befestigt sind;
e4) das magnetische Feld des einen oder der mehreren Magneten in einer ersten Position der Scheibe an der Fluidverbindungsleitung (95) des Abschnitts (97) angelegt ist; und
e5) das an der Fluidverbindungsleitung (95) des Abschnitts (97) angelegte magnetische Feld einer zweiten Position geringer ist.

2. Vorrichtung nach Anspruch 1, **dadurch gekennzeichnet, dass** das LS ein Hochdruck-LS (HLS) ist, wobei das HLS ein geschlossenes System ist und der Auslass (100) fluidisch mit einer Trennungseinheit (130) verbunden ist und die Trennungseinheit fluidisch mit einem Detektor (140) verbunden ist und der Ausgangsport (145) des Detektors fluidisch mit dem Sammelgefäß (80) verbunden ist.

3. Vorrichtung nach einem der Ansprüche 1 oder 2, **dadurch gekennzeichnet, dass** der Abschnitt (97) der Fluidverbindungsleitung (95) im Extraktor (90) parallel zu etwa der Hälfte des Umfangs des Rands der drehbaren runden Scheibe (200) angeordnet ist.

4. Vorrichtung nach Anspruch 3, **dadurch gekennzeichnet, dass** sich der eine oder die mehreren Permanentmagneten (210) am Rand der Scheibe (200) befinden.

5. Vorrichtung nach Anspruch 4, **dadurch gekennzeichnet, dass** sich eine Vielzahl von Magneten in dem Segment befindet.

6. Vorrichtung nach einem der Ansprüche 1 bis 5, **dadurch gekennzeichnet, dass** die Scheibe weiterhin ein steuerbares Stellglied umfasst, das eine Drehbewegung der Scheibe bewirken kann.

7. Verwendung einer Vorrichtung nach einem der Ansprüche 1 bis 6 zum Manipulieren magnetischer Mikropartikel und von zwei unterschiedlichen mobilen Phasen in einem flüssigen Aggregatzustand.

8. Verfahren zum Erhalten eines gereinigten Analyten aus einem komplexen flüssigen Probenmaterial, das den Analyten enthält, das folgende Schritte umfasst:
(a) Kontaktieren des flüssigen Probenmaterials (121), das den Analyten mit Mikropartikeln (122), die aus einem magnetischen oder paramagnetischen Material hergestellt sind, enthält, mit einer funktionalisierten Oberfläche (123), wodurch der Analyt (124) auf der Oberfläche adsorbiert wird; gefolgt von
(b) Einführen des Probenmaterials mit den Mikropartikeln in eine Vorrichtung nach einem der Ansprüche 1 bis 6 unter Verwenden der Einspritzvorrichtung (50); gefolgt von
(c) Pumpen einer ersten mobilen Phase (65) aus einem ersten Lagergefäß (60) in den ersten Einlass (10) der Vorrichtung, wobei die Umschalteinheit (110) der Vorrichtung den Verbindungszustand (I) herstellt und in dem Extraktor (90) ein Magnetfeld an der Verbindungsleitung (95) in dem Abschnitt (97) angelegt wird, wobei das Magnetfeld geeignet ist, um die magnetischen oder paramagnetischen Mikropartikel (122), die in der mobilen Phase enthalten sind, die durch die Leitung (95) eintritt, auf der am nächsten liegenden Innenwand (93) der Leitung (95) gegenüber dem Magnetfeld in dem ersten Abschnitt (97) zu immobilisieren; gefolgt von
(d) Immobilisieren der Mikropartikel (122) in dem Extraktor (90) auf der Innenwand (93) der Leitung (95) in dem Abschnitt (97) der Leitung; gefolgt von
(e) Abtrennen der Mikropartikel (122) von dem restlichen Probenmaterial durch weiteres Pumpen der ersten mobilen Phase (65) aus dem ersten Lagergefäß (60) in den ersten Einlass (10), wodurch die immobilisierten Mikropartikel mit der ersten mobilen Phase gewaschen werden, und das restliche Probenmaterial in den Sammelbehälter (80) gespeist wird; gefolgt von
(f) Umschalten der Umschalteinheit (110) in den Verbindungszustand (II) und Pumpen einer zweiten mobilen Phase (75) aus dem zweiten Lagergefäß (70) in den zweiten Einlass (20) der Vorrichtung, wobei die zweite mobile Phase (75) geeignet ist, um den adsorbierten Analyten von der Oberfläche der Mikropartikel (122) zu lösen; gefolgt von
(g) Eluieren des Analyten durch Kontaktieren der Mikropartikel (122) mit der zweiten mobilen Phase (75); gefolgt von
(h) Bewegen der zweiten mobilen Phase, die den eluierten Analyten enthält, zu dem Auslass (100) der Vorrichtung durch weiteres Pumpen der zweiten mobilen Phase (75) aus dem zweiten Lagergefäß (70) in den zweiten Eingangsport (20), womit der Analyt in einer gereinigten Form an dem Auslass (100) erhalten wird.

## Revendications

1. Dispositif de séparation de microparticules magnétiques ou paramagnétiques et d'élution d'un analyte adsorbé sur lesdites particules, le dispositif étant un système liquide (LS) comprenant
une première admission et une seconde admission (10, 20) pour une première phase mobile et une seconde phase mobile (65, 75), les phases mobiles étant dans un état liquide d'agrégation,
un moyen d'établissement de liaisons fluidiques (30),
une unité de commutation permettant de produire deux états de liaison fluidique (110) différents, l'unité de commutation ayant trois orifices d'entrée (El, E2, E3) et trois orifices de sortie (A1, A2, A3),
des microparticules magnétiques ou paramagnétiques (122) et un matériel d'échantillon liquide (121),
au moins un moyen de génération de pression (40), un dispositif d'injection (50), deux récipients de stockage (60, 70) pour une première phase mobile et une seconde phase mobile (65, 75), un récipient de collecte (80), une évacuation (100) et un extracteur (90),
al) l'extracteur (90) comprenant (i) un orifice d'entrée (91), (ii) un orifice de sortie (92), (iii) une section (97) entre ledit orifice d'entrée et ledit orifice de sortie, la section comprenant une ligne de liaison fluidique (95) et (iv) un moyen (96) capable d'appliquer temporairement un champ magnétique local sur la ligne de liaison fluidique (95) dans la section (97),
b1) la première admission (10) étant conçue de sorte que la première phase mobile (65) puisse être introduite sous pression dans le LS depuis le premier récipient de stockage (60) par l'intermédiaire d'une liaison fluidique ;
b2) la première admission (10) étant en outre reliée de manière fluidique à un dispositif d'injection (50), le dispositif d'injection étant conçu de sorte qu'il permette l'introduction d'un mélange (120) du matériel d'échantillon liquide (121) et desdites particules magnétiques ou paramagnétiques (122) en suspension dans celui-ci dans la première phase mobile qui a été introduite à travers l'admission ;
b3) la seconde admission (20) étant conçue de sorte que la seconde phase mobile (75) puisse être introduite sous pression dans le LS depuis le second récipient de stockage (70) par l'intermédiaire d'une liaison fluidique ;
b4) la première admission (10) étant reliée au premier orifice d'entrée (E1) de l'unité de commutation (110) et la seconde admission (20) étant reliée de manière fluidique au deuxième orifice d'entrée (E2) de l'unité de commutation ;
c1) l'orifice d'entrée (91) de l'extracteur (90) étant relié de manière fluidique au premier orifice de sortie (A1) de l'unité de commutation et l'orifice de sortie (92) de l'extracteur étant relié de manière fluidique au troisième orifice d'admission (E3) de l'unité de commutation ;
c2) le deuxième orifice de sortie (A2) de l'unité de commutation (110) est l'évacuation (100) ou est relié de manière fluidique à l'évacuation (100) ;
c3) le troisième orifice de sortie (A3) de l'unité de commutation (110) est relié de manière fluidique au récipient de collecte (80) ; et
dl) l'unité de commutation (110) est adaptée dans un premier état de liaison (I) à la liaison fluidique de E1 et de A1, de E2 et de A2 ainsi que de E3 et de A3 et dans le second état de liaison (II), elle est adaptée à la liaison fluidique de E2 et de A1, de E3 et de A2 ainsi que de E1 et de A3,
le dispositif étant en outre **caractérisé en ce que**
e1) le moyen (96) comprend un disque circulaire rotatif (200) ayant un actionneur contrôlable capable d'ajuster le disque, par rotation, dans une première position et une seconde position ;
e2) une fraction de la circonférence du disque (200) est située à proximité de la ligne de liaison fluidique (95) de la section (97) ;
e3) un ou plusieurs aimants (210) permanents sont fixés sur un segment du disque ;
e4) dans une première position du disque, le champ magnétique du ou des aimants est appliqué sur la ligne de liaison fluidique (95) de la section (97) ; et
e5) dans une seconde position, le champ magnétique appliqué sur la ligne de liaison fluidique (95) de la section (97) est réduit.

2. Dispositif selon la revendication 1, **caractérisé en ce que** le LS est un LS haute pression (HLS), le HLS est un système fermé et l'évacuation (100) est reliée de manière fluidique à une unité de séparation (130), et l'unité de séparation est reliée de manière fluidique à un détecteur (140) et l'orifice de sortie (145) du détecteur est relié de manière fluidique au récipient de collecte (80).

3. Dispositif selon l'une des revendications 1 ou 2, **caractérisé en ce que** la section (97) de la ligne de liaison fluidique (95) dans l'extracteur (90) est disposée parallèlement à environ la moitié de la circonférence du bord du disque circulaire rotatif (200).

4. Dispositif selon la revendication 3, **caractérisé en ce que** le ou les aimants permanents (210) sont situés sur le bord du disque (200).

5. Dispositif selon la revendication 4, **caractérisé en ce qu'**une pluralité d'aimants est située sur le segment.

6. Dispositif selon l'une quelconque des revendications 1 à 5, **caractérisé en ce que** le disque comprend en outre un actionneur contrôlable capable d'effectuer le mouvement rotatif du disque.

7. Utilisation d'un dispositif selon l'une des revendications 1 à 6 permettant de manipuler des microparticules magnétiques et deux phases mobiles différentes dans un état liquide d'agrégation.

8. Procédé d'obtention d'un analyte purifié à partir d'un matériel d'échantillon liquide complexe contenant ledit analyte comprenant les étapes
(a) de mise en contact du matériel d'échantillon liquide (121) contenant l'analyte avec des microparticules (122) se composant d'un matériau magnétique ou paramagnétique doté d'une surface fonctionnalisée (123) moyennant quoi l'analyte (124) est adsorbé sur la surface ; suivie par
(b) l'introduction du matériel d'échantillon avec les microparticules dans un dispositif selon l'une des revendications 1 à 6 à l'aide du dispositif d'injection (50) ; suivie par
(c) le pompage d'une première phase mobile (65) depuis un premier récipient de stockage (60) dans la première admission (10) du dispositif dans lequel l'unité de commutation (110) du dispositif établit l'état de liaison (I), et dans l'extracteur (90), un champ magnétique est appliqué à la ligne de liaison (95) située dans la section (97), le champ magnétique étant adapté à l'immobilisation des microparticules magnétiques ou paramagnétiques (122) contenues dans la phase mobile entrant par la ligne (95) sur la paroi interne (93) la plus proche de la ligne (95) faisant face au champ magnétique dans la première section (97) ; suivi par
(d) l'immobilisation des microparticules (122) dans l'extracteur (90) sur la paroi interne (93) de la ligne (95) dans la section (97) de la ligne ; suivie par
(e) la séparation des microparticules (122) du matériel d'échantillon restant par un pompage supplémentaire de la première phase mobile (65) depuis le premier récipient de stockage (60) dans la première admission (10) moyennant quoi les microparticules immobilisées sont lavées avec la première phase mobile et le matériel d'échantillon restant est introduit dans le récipient de collecte (80) ; suivie par
(f) le passage de l'unité de commutation (110) à l'état de liaison (II) et le pompage d'une seconde phase mobile (75) depuis le second récipient de stockage (70) dans la seconde admission (20) du dispositif dans lequel la seconde phase mobile (75) est adaptée au détachement de l'analyte adsorbé d'avec la surface des microparticules (122) ; suivis par
(g) l'élution de l'analyte par la mise en contact des microparticules (122) avec la seconde phase mobile (75) ; suivie par
(h) le déplacement la seconde phase mobile contenant l'analyte élué vers l'évacuation (100) du dispositif par un pompage supplémentaire de la seconde phase mobile (75) depuis le second récipient de stockage (70) dans le second orifice d'entrée (20) au moyen duquel l'analyte est obtenu sous une forme purifiée au niveau de l'évacuation (100).
